# EUROPÄISCHE PATENTSCHRIFT

(11) **EP 1 018 617 B1**
(45) Veröffentlichungstag und Bekanntmachung des Hinweises auf die Patenterteilung: **03.11.2004**
(21) Anmeldenummer: 99126267.6
(22) Anmeldetag: 31.12.1999
(51) Int. Cl.: F16L 17/025, F16L 21/03, F16L 47/06

(54) **Dichtring für eine Steckmuffenverbindung**
Sealing ring for a socket joint
Joint d'étanchéité pour un raccord à manchon

(30) Priorität: 07.01.1999 DE 19900302
(43) Veröffentlichungstag der Anmeldung: 12.07.2000
(73) Patentinhaber: M.O.L. GUMMIVERARBEITUNG GMBH & Co. KG, D-49377 Vechta (DE)
(72) Erfinder: Lüers, Gregor, 49377 Vechta (DE)
(74) Vertreter: Meyer, Ludgerus A., Dipl.-Ing.

(56) Entgegenhaltungen:
- EP-A- 0 867 650
- DE-U- 8 333 286
- US-A- 4 572 523

## Beschreibung

Die Erfindung betrifft einen Dichtring für eine Steckmuffenverbindung mit einem Verstärkungsring nach dem Oberbegriff des Anspruchs 1.

Dichtringe dieser Art werden normalerweise zur Verbindung zweier Rohre, wie Kunststoff-Abwasserrohre, verwendet, die in Ringsicken des Muffenendes eines Rohres eingesetzt werden. Wenn das Spitzende eines zweiten Rohres in das Muffenende des ersten Rohres eingeschoben wird, legen sich die Dichtlippen der Dichtung eng an das einzuschiebende Rohr an, so daß in der Regel die Abdichtung gewährleistet ist.

Da der Verstärkungsring eines derartigen Dichtrings relativ starr ist, und beispielsweise aus Stahl oder Kunststoff besteht, werden derartige Dichtringe bereits bei der Herstellung des Rohres in die Ringsicken der Muffen eingesetzt. Damit ist in der Regel auch eine Unveriierbarkeit der Dichtung gewährleistet und es ist auch sichergestellt, daß die Gefahr von Verschmutzungen zwischen Dichtring und Sickengrund der Muffe verringert ist, wie es insbesondere im rauhen Baustellenbetrieb sonst leicht möglich wäre.

Aus der DE 197 13 329 A1 ist ein Dichtring für Steckmuffenverbindungen mit einem Verstärkungsring bekannt, bei dem die Dichtlippe unter einem Neigungswinkel schräg zum Lippensockel verläuft und der Dichtring auf der der Lippendichtung gegenüberliegenden Seite eine Endverdickung aufweist, auf der beim Einschieben des Spitzendes eines Rohres ein Teil der Lippendichtung zur Auflage kommt. Hierdurch wird die Endverdickung zusammengedrückt und erhöht damit die Andruckkraft der Lippendichtung. Die Endverdickung tritt nicht mit dem einzuschiebenden Spitzende in Kontakt, da zwischen dem Spitzende und der Endverdickung das Ende der Lippendichtung liegt.

Bei dieser bekannten Art von Dichtringen weist die Dichtung lediglich eine einzige Abdichtlippe auf, die an dem einzuschiebenden Spitzende eines Rohres anliegt. Es besteht daher die Gefahr, daß mögliche Verschmutzungen der Lippendichtung zu einer Undichtigkeit der Rohrverbindung führen. Ferner ergibt sich beim Ablenken der Lippendichtung aufgrund des einzuschiebenden Spitzendes eine starke Verkeilung des Lippengrundes an einer Kante des Verstärkungsrings, so daß leicht die Gefahr einer Beschädigung der Lippendichtung besteht.

Auch die aus der EP 0 451 900 B1 bekannte Dichtung zeigt bereits eine Endverdickung, die den eingesetzten Verstärkungsring zum Teil überragt. Durch eine besondere Gestaltung der Lippendichtung wird dabei jedoch vermieden, daß eine Keilwirkung an der Kante des Dichtrings auftritt. Ferner sind insgesamt drei Lippen vorhanden, die eine verbesserte Dichtfunktion bewirken.

Der Erfindung liegt die Aufgabe zugrunde, einen Dichtring für eine Steckmuffenverbindung mit eingesetztem Verstärkungsring anzugeben, durch den einerseits eine verbesserte Abdichtwirkung von zusammenzusetzenden Rohren gewährleistet und andererseits eine hohe Andruckkraft der Dichtung erreichbar ist.

Diese Aufgabe wird durch die im Anspruch 1 angegebene Erfindung gelöst. Vorteilhafte Weiterbildungen der Erfindung sind in Unteransprüchen angegeben.

Bei der Erfindung wird ein Dichtring für eine Steckmuffenverbindung angegeben, der in eine im Querschnitt im wesentlichen rechteckige Ringsicke des Muffenendes eines Rohrendes einsetzbar ist und einen umlaufenden Verstärkungsring enthält, der in einer nach innen offenen Ausnehmung des Dichtrings aufgenommen ist, wobei der Dichtring an der Vorderseite eine angewinkelte Lippendichtung aufweist und am rückwärtigen Ende eine Andruckdichtung enthält. Erfindungsgemäß weist die rückwärtige Andruckdichtung eine vordere, schräg zur Radialebene des Rohres nach hinten geneigte Auflauffläche auf, über die beim Einschieben des Spitzendes eines zweiten Rohres in die Muffe die Andruckdichtung zur Anlage an das Spitzende des zweiten Rohres durch die abgelenkte Lippendichtung nach rückwärts und nach innen zur Rohrachse hin ausgelenkt wird.

Durch die erfindungsgemäßen Maßnahmen läßt sich erreichen, daß die durch das Spitzendes des einzuschiebenden Rohres abgelenkte Lippendichtung auf der Auflauffläche der Andruckdichtung zur Anlage kommt und bei weiterem Einschieben des Rohres die Andruckdichtung in Einschieberichtung nach hinten drückt und gleichzeitig zusammendrückt. Hierdurch bleibt die Dichtfunktion der Lippendichtung einerseits erhalten, aber andererseits ist auch eine Dichtfunktion der Andruckdichtung erreichbar. Durch Andrücken der Lippendichtung an die Andruckdichtung wird ferner erreicht, daß die Andruckdichtung auch zusammengedrückt wird, und daher die Druckkraft der Dichtung erhöht wird.

Die Auflauffläche ist schräg zur Radialebene des Rohres nach hinten/innen geneigt, so daß die auf die Auflauffläche auftreffende Lippendichtung bei Erhöhung des Druckes über die Auflauffläche gleitet und damit die Andruckdichtung in Einschieberichtung des Spitzendes verformt.

Vorzugsweise überragt die Andruckdichtung den Verstärkungsring in seiner Ausgangsstellung in einem Teilbereich. Dadurch läßt sich die Bauform der Dichtung verkürzen. Im zusammengesteckten Zustand der Rohre ist die Andruckdichtung jedoch soweit ausgelenkt, daß sie den Verstärkungsring nicht mehr überragt, sondern der Raum oberhalb des Verstärkungsrings von der Lippendichtung eingenommen wird.

Um zu vermeiden, daß die seitlichen Kanten des Verstärkungsrings Keilwirkungen auf die Lippendichtung und/oder die Andruckdichtung ausüben, ist vorzugsweise vorgesehen, daß der Verstärkungsring entsprechende Fasen oder Abrundungen aufweist.

Der Dichtring weist auf seiner im Sickengrund anliegenden Außenseite vorzugsweise mehrere umlaufende stegartige Vorsprünge auf. Diese sind in ihrer Höhe so gestaltet, daß auch im zusammengesteckten Zustand zweier Rohre zwischen den Vorsprüngen Freiräume zwischen Dichtrücken und Sickengrund verbleiben. Der Dichtring bleibt daher auch in diesem Bereich kompressibel, so daß er für große Toleranzbereiche von Rohrsystemen einsetzbar ist. Die Vorsprünge sind vorzugsweise im Querschnitt trapezförmig gestaltet und sind durch bogenförmige Ausnehmungen der Dichtungsaußenseite miteinander verbunden.

Vorzugsweise beträgt das Verhältnis zwischen Dichtringbreite und Dichtringdicke zwischen 2 : 1 und 4 :1, insbesondere 3 : 1.

Die Erfindung wird nachstehend anhand eines Ausführungsbeispiels näher erläutert. Es zeigen:
- Fig. 1: eine Querschnittsansicht eines erfindungsgemäßen Dichtrings, der in einer Ringsicke eines Muffenendes eines Rohres eingesetzt ist im entlasteten Zustand,
- Fig. 2: einen erfindungsgemäßen Dichtring in einer Ringsicke, bei dem das Spitzende eines zweiten Rohres in das Muffenende des die Dichtung aufnehmenden Rohres eingesteckt ist, und
- Fig. 3: ein weiteres Ausführungsbeispiel der Erfindung.

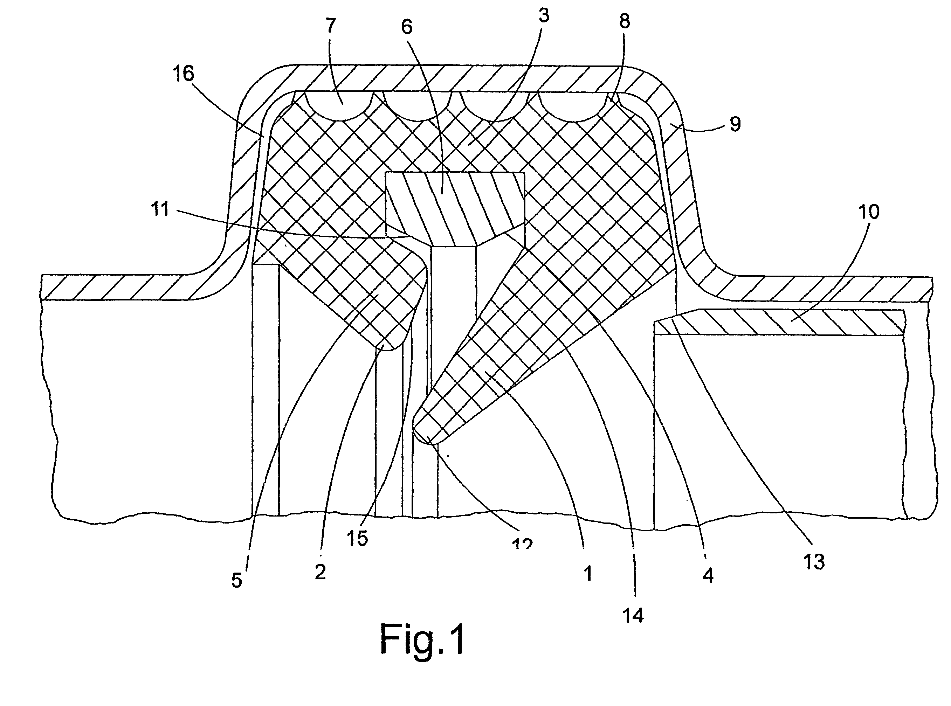

Die in Fig. 1 dargestellte Dichtung ist in einer Ringsicke 16 eines Muffenendes 9 eines ersten Rohres eingesetzt. Sie enthält einen aus Kunststoff oder Stahl bestehenden Verstärkungsring 6, der innenseitige Fasen oder Abrundungen 4 und 11 enthält. Der Verstärkungsring befindet sich in einer Ausnehmung der Dichtung, die zum Radiusinneren hin im wesentlichen durch die Lippendichtung 1 und die Andruckdichtung 5 abgedeckt ist. Fig. 1 zeigt die Dichtung im entspannten Zustand. Wenn in diesem Zustand der Abstand zwischen der Lippe 12 der Lippendichtung 1 und der Lippe 2 der Andruckdichtung 5 bis nahe Null reduziert wird, läßt sich erreichen, daß der Raum der Dichtung, in dem der Verstärkungsring 6 angeordnet ist, gegen Verschmutzung der Dichtung im entlasteten Zustand weitgehend abgesichert ist.

Die Lippendichtung 1 verläuft vom Vorderende der Dichtung ausgehend schräg nach hinten und wird beim Einschieben des Spitzendes 13 eines zweiten Rohres 10 über die Lippenflanke 14 nach außen abgelenkt. Auf der Außenseite des Dichtrings befinden sich mehrere Vorsprünge 8, vorzugsweise fünf Vorsprünge, die jeweils durch bogenförmige Freiräume 7 des Dichtrückens 3 voneinander getrennt sind. Die zwischen den Vorsprüngen 8 befindlichen Freiräume 7 bilden einen Kompressionsraum beim Zusammenstecken der Rohre. Diese Freiräume 7 bleiben zum Teil auch im zusammengesteckten Zustand der Rohre erhalten, um so eine große Toleranzbreite zusammenzusteckender Rohre erfassen zu können.

Die an der Rückseite des Dichtrings angeordnete Andruckdichtung 5 weist eine schräg nach hinten/innen verlaufende Auflauffläche 15 an der der Lippendichtung gegenüberstehenden Seite auf. Wenn daher das Spitzende 13 eines zweiten Rohres 10 auf die Lippenflanke 14 der Lippendichtung 1 auftrifft, wird die Lippe 12 der Lippendichtung 1 an die Auflauffläche 15 der Andruckdichtung 5 angedrückt und gleitet entlang der Auflauffläche 15 nach innen, so daß die Andruckdichtung 5 nach hinten ausgelenkt wird und sich daher zum Radiusinneren aufbäumt.

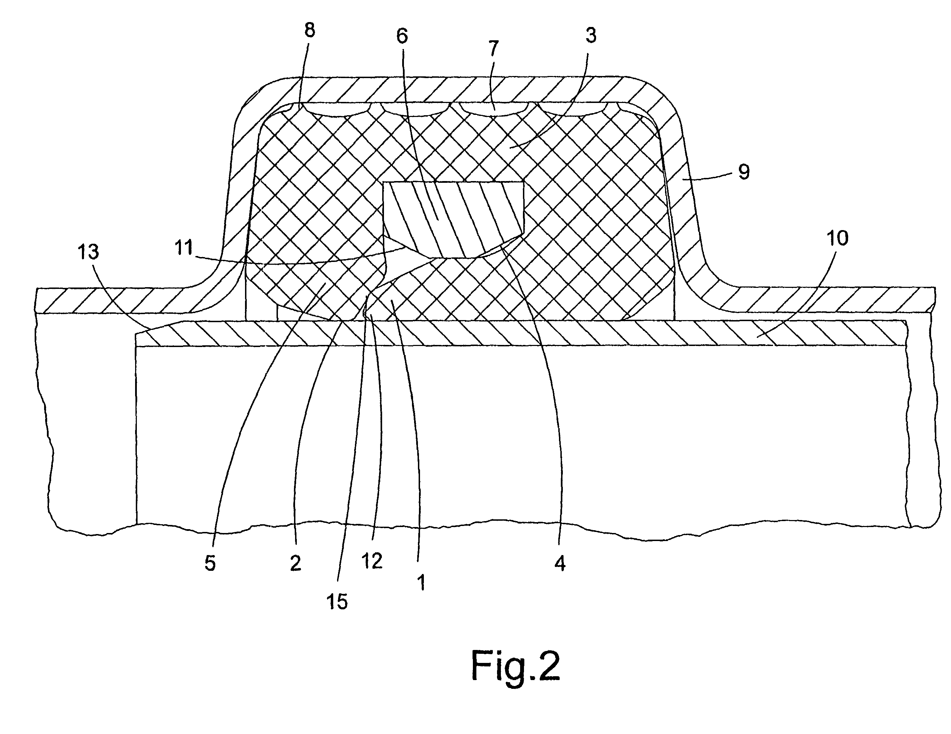

Fig. 2 zeigt den entsprechenden Zustand eines Dichtrings bei eingeschobenem Spitzende 13 eines zweiten Rohres 10 in das erste Rohr 9. Es ist deutlich zu erkennen, daß die Lippe 12 auf der Auflauffläche 15 der Andruckdichtung 5 zur Anlage gekommen ist und diese zur Rückseite hin ausgelenkt hat. Das Aufbäumen der Andruckdichtung 5 nach innen wird jedoch durch das Rohr 10 wieder aufgehoben, indem die Andruckdichtung 5 komprimiert wird. Dadurch ist erreicht, daß einerseits die Lippendichtung 1 vollständig an der Rohraußenseite des Rohrs 10 zur Anlage kommt und insbesondere die Lippe 12 ihre Dichtfunktion erfüllt, daß ferner die Lippe 12 durch das Andrücken an die Andruckdichtung 5 in ihrer Andruckkraft verstärkt wird, daß die Lippe 2 der Andruckdichtung 5 eine zusätzliche Dichtwirkung ausübt und die Kompression der Andruckdichtung 5 die Dichtwirkung der Lippe 2 zusätzlich erhöht. Gleichzeitig mit der Kompression der Andruckdichtung 5 wird auch die Dichtwirkung auf der Dichtungsrückseite im Sickengrund erhöht und die Vorsprünge 8 werden zusammengedrückt. Ferner füllt die gesamte Dichtung die Ringsicke der Muffe mit Ausnahme der Freiräume 7 vollkommen aus.

Fig. 2 zeigt auch deutlich, daß die Lippendichtung 1 keine Keilwirkung an dem Verstärkungsring 6 erfährt, sondern gleichmäßig um die Fase 4 des Verstärkungsrings 6 herumläuft. Die rückwärtige Fase des Verstärkungsrings 6 ist im zusammengesteckten Zustand der Rohre ohne Bedeutung. Im entlasteten Zustand der Dichtung kann sie jedoch dazu dienen, das Volumen der Andruckdichtung 5 vergrößern zu können, ohne daß eine Verlängerung der Dichtung erforderlich ist.

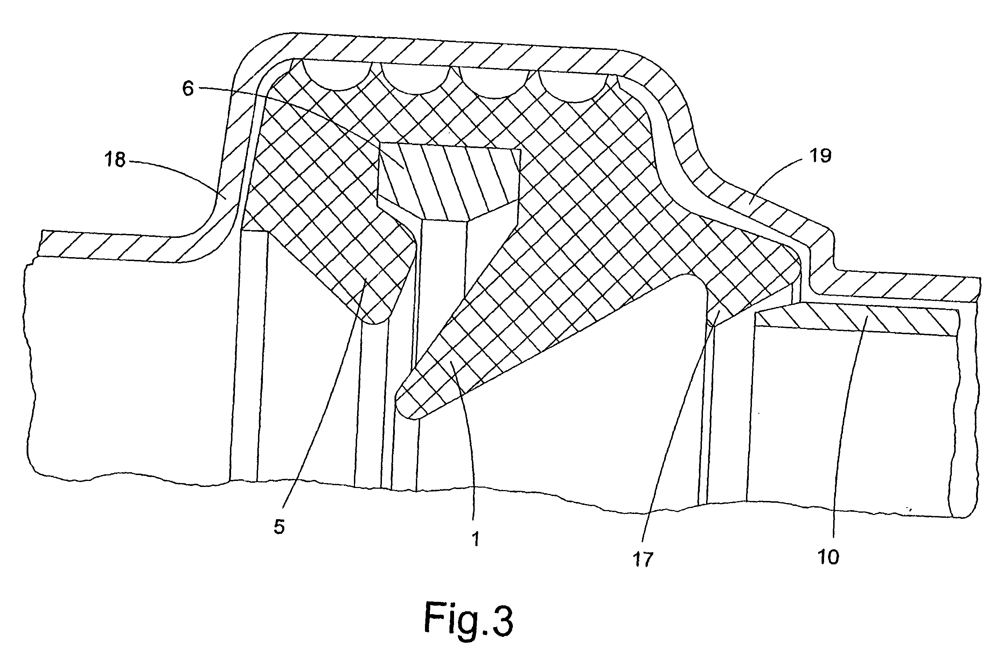

Schließlich zeigt Fig. 3 ein weiteres Ausführungsbeispiel der Erfindung bei einer Dichtung mit einer zusätzlichen vorderen Abstreiflippe 17. Der Bereich der Abstreiflippe 17 befindet sich im Bereich einer Stufe 19 einer entsprechend ausgestatteten Muffe 18. Dieser Bereich einer Dichtung ist bereits aus dem DE-GM 29 810 672 bekannt. Das Grundprinzip der erfindungsgemäßen Dichtung ist jedoch auch bei diesem Gegenstand verwendbar.

### Bezugszeichenliste

- 1: Lippendichtung
- 2: Lippe
- 3: Dichtrücken
- 4: Fase
- 5: Andruckdichtung
- 6: Verstärkungsring
- 7: Freiraum
- 8: Vorsprung
- 9: Muffenende
- 10: zweites Rohr
- 11: Fase
- 12: Lippe
- 13: Spitzende
- 14: Lippenflanke
- 15: Auflauffläche
- 16: Sicke
- 17: Abstreiflippe
- 18: Muffe
- 19: Stufe

## Patentansprüche

1. Dichtring für eine Steckmuffenverbindung, der in eine im Querschnitt im wesentlichen rechteckige Ringsicke (16) des Muffenendes (9) eines Rohrendes einsetzbar ist, und einen umlaufenden Verstärkungsring (6) enthält, der in einer nach innen offenen Ausnehmung des Dichtrings aufgenommen ist, wobei der Dichtring an seinem Vorderende eine zum rückwärtigen Ende hin angewinkelte Lippendichtung (1) aufweist und am rückwärtigen Ende eine Andruckdichtung (5) enthält, **dadurch gekennzeichnet, daß** die rückwärtige Andruckdichtung (5) eine vordere schräg zur Radialebene des Rohres nach hinten geneigte Auflauffläche (15) aufweist, über die bei Einschieben des Spitzendes (13) eines zweiten Rohres (10) in die Muffe die Andruckdichtung (5) zur Anlage an das Spitzende des zweiten Rohres durch die abgelenkte Lippendichtung nach rückwärts und nach innen zur Rohrachse hin ausgelenkt wird.

2. Dichtring nach Anspruch 1, **dadurch gekennzeichnet, daß** die Andruckdichtung (5) den Verstärkungsring (6) in einem Teilbereich überragt.

3. Dichtring nach einem der Ansprüche 1 oder 2, **dadurch gekennzeichnet, daß** der Verstärkungsring (6) an seiner an die Lippendichtung (1) angrenzenden Seite eine Fase (4) oder Abrundung aufweist.

4. Dichtring nach einem der Ansprüche 1 - 3, **dadurch gekennzeichnet, daß** der Verstärkungsring (6) an seiner an die Andruckdichtung angrenzende Seite eine innere Fase (11) oder Abrundung aufweist.

5. Dichtring nach einem der vorhergehenden Ansprüche, **dadurch gekennzeichnet, daß** der Dichtring an seiner im Sickengrund anliegenden Außenseite mehrere umlaufende Vorsprünge (8) aufweist.

6. Dichtring nach Anspruch 5, **dadurch gekennzeichnet, daß** die Vorsprünge (8) eine derartige Höhe gegenüber dem Dichtrücken (3) aufweisen, daß auch im zusammengesteckten Zustand zweier Rohre zwischen den Vorsprüngen (8) Freiräume (7) zwischen Dichtrücken (3) und dem Sickengrund verbleiben.

7. Dichtring nach Anspruch 1, **dadurch gekennzeichnet, daß** die Vorsprünge (8) im Querschnitt trapezförmig gestaltet sind.

8. Dichtring nach einem oder mehreren der vorhergehenden Ansprüche, **dadurch gekennzeichnet, daß** das Verhältnis zwischen Dichtringbreite und Dichtringdicke zwischen 2 : 1 und 4 : 1 beträgt.

9. Dichtring nach Anspruch 8, **dadurch gekennzeichnet, daß** das Verhältnis zwischen Dichtringbreite und Dichtringdicke 3 : 1 beträgt.

## Claims

1. Sealing ring for an insertion-type sleeve joint, which sealing ring can be inserted in an annular bead (16), which is substantially rectangular in cross-section, in the sleeve end (9) of the end of a pipe, and contains a circumferential reinforcing ring (6) which is received in an inwardly open recess in the sealing ring, wherein said sealing ring has, at its front end, a lip seal (1) which is angled towards the rearward end and, at the rearward end, a press-on seal (5), **characterised in that** the rearward press-on seal (5) has a front run-up face (15) which is inclined rearwards obliquely to the radial plane of the pipe and via which, when the pointed end (13) of a second pipe (10) is pushed into the sleeve, said press-on seal (5) is deflected out rearwards, and inwards towards the axis of the pipe, by the deflected lip seal in order to rest against the pointed end of the second pipe.

2. Sealing ring according to claim 1, **characterised in that** the press-on seal (5) protrudes above the reinforcing ring (6) in a partial region.

3. Sealing ring according to one of claims 1 or 2, **characterised in that** the reinforcing ring (6) has a chamfer (4) or rounded-off portion on its side that adjoins the lip seal (1).

4. Sealing ring according to one of claims 1 to 3, **characterised in that** the reinforcing ring (6) has an inner chamfer (11) or rounded-off portion on its side that adjoins the press-on seal.

5. Sealing ring according to one of the preceding claims, **characterised in that** the sealing ring has a number of circumferential projections (8) on its outer side that rests in the base of the bead.

6. Sealing ring according to claim 5, **characterised in that** the projections (8) have a height, in relation to the back (3) of the seal, such that clear spaces (7) between the back (3) of the seal and the base of the bead are left between the projections (8), even when two pipes are in the assembled condition.

7. Sealing ring according to claim 1, **characterised in that** the projections (8) are shaped in a trapezoidal manner in cross-section.

8. Sealing ring according to one or more of the preceding claims, **characterised in that** the ratio between the breadth of the sealing ring and its thickness is between 2:1 and 4:1.

9. Sealing ring according to claim 8, **characterised in that** the ratio between the breadth of the sealing ring and its thickness is 3:1.

## Revendications

1. Bague d'étanchéité pour un raccord à manchon, qui est apte à être placée dans une moulure annulaire (16) à section transversale sensiblement rectangulaire de l'extrémité de manchon (9) d'une extrémité de tuyau et qui contient une bague de renforcement périphérique (6) logée dans un creux de la bague d'étanchéité ouvert vers l'intérieur, la bague d'étanchéité présentant à son extrémité avant un joint à lèvre (1) coudé vers l'extrémité arrière, et contenant à l'extrémité arrière un joint de pression (5), **caractérisée en ce que** le joint de pression arrière (5) présente une surface d'application avant (15) inclinée vers l'arrière par rapport au plan radial du tuyau, grâce à laquelle, lorsqu'on introduit l'extrémité en pointe (13) d'un second tuyau (10) dans le manchon, le joint de pression (5) destiné à venir s'appliquer contre l'extrémité en pointe du second tuyau est déformé par le joint à lèvre dévié, vers l'arrière et vers l'intérieur en direction de l'axe du tuyau.

2. Bague d'étanchéité selon la revendication 1, **caractérisée en ce que** le joint de pression (5) dépasse de la bague de renforcement (6) dans une zone partielle.

3. Bague d'étanchéité selon la revendication 1 ou 2, **caractérisée en ce que** la bague de renforcement (6) présente sur son côté voisin du joint à lèvre (1) un biseau (4) ou une partie arrondie.

4. Bague d'étanchéité selon l'une des revendications 1 à 3, **caractérisée en ce que** la bague de renforcement (6) présente sur son côté voisin du joint de pression un biseau intérieur (11) ou une partie arrondie.

5. Bague d'étanchéité selon l'une des revendications précédentes, **caractérisée en ce qu'**-elle présente sur son côté extérieur appliqué contre le fond de la moulure plusieurs saillies périphériques (8).

6. Bague d'étanchéité selon la revendication 5, **caractérisée en ce que** les saillies (8) présentent par rapport à la partie arrière d'étanchéité (3) une hauteur qui est telle que même quand deux tuyaux sont assemblés, il reste entre les saillies (8) des espaces libres (7) entre ladite partie arrière (3) et le fond de la moulure.

7. Bague d'étanchéité selon la revendication 1, **caractérisée en ce que** les saillies (8) sont trapézoïdales en section transversale.

8. Bague d'étanchéité selon l'une au moins des revendications précédentes, **caractérisée en ce que** le rapport entre la largeur et l'épaisseur de la bague d'étanchéité est situé entre 2:1 et 4:1.

9. Bague d'étanchéité selon la revendication 8, **caractérisée en ce que** le rapport entre la largeur et l'épaisseur de la bague d'étanchéité est de 3:1.
